# EUROPÄISCHE PATENTSCHRIFT

(11) **EP 1 171 540 B1**
(45) Veröffentlichungstag und Bekanntmachung des Hinweises auf die Patenterteilung: **17.11.2004**
(21) Anmeldenummer: 00922600.2
(22) Anmeldetag: 04.04.2000
(51) Int. Cl.: C09J 153/02, C09J 123/16, A61F 13/56

(54) **NIEDRIGVISKOSER SCHMELZKLEBSTOFF**
HOT-MELT ADHESIVE OF LOW VISCOSITY
COLLE A FUSION DE FAIBLE VISCOSITE

(30) Priorität: 13.04.1999 DE 19916503
(43) Veröffentlichungstag der Anmeldung: 16.01.2002
(73) Patentinhaber: Henkel Kommanditgesellschaft auf Aktien, 40589 Düsseldorf (DE)
(72) Erfinder: TAAL, Eduard, Franciscus, D-40231 Düsseldorf (DE); VOSS, Rüdiger, D-40589 Düsseldorf (DE); EISFELD, Heike, D-40597 Düsseldorf (DE)
(86) Internationale Anmeldenummer: PCT/EP2000/002966
(87) Internationale Veröffentlichungsnummer: WO 2000/061695

(56) Entgegenhaltungen:
- EP-A- 0 442 045
- WO-A-00/17286
- WO-A-96/07385
- WO-A-97/15636
- DE-A- 3 428 917
- US-A- 4 046 838
- US-A- 4 210 570
- US-A- 5 021 257

## Beschreibung

Die Erfindung betrifft einen niedrigviskosen Schmelzklebstoff auf der Basis mindestens eines bei 20 °C festen Kohlenwasserstoff-Harzes und eines Öles. Die Erfindung betrifft ebenso die Herstellung dieses Schmelzklebstoffes sowie seine Verwendung.

Ein derartiger Schmelzklebstoff ist bekannt. In der EP 0 442 045 B1 wird nämlich eine sprühbare Heißschmelzmasse auf der Basis eines Poly-α-olefins mit nicht über 30 Gew.-% an Zusätzen, insbesondere an Wachsen und/oder Harzen, beschrieben. Auch der Einsatz von paraffinischen oder aromatischen Ölen ist möglich. Die Beispiele enthalten Ethen/Propen/Buten-1-Terpolymere und plastische Mikrowachse sowie teilweise auch ein Kohlenwasserstoff-Harz. Die Viskositäten liegen bei 2 700 bzw. 3 400 mPas bei 190 °C.

In der technischen Information "Vestoplast: Klebrohstoff für Hot-Melt-Anwendungen" des Untemehmens Hüls aus dem Jahre 1996 wurde eine Reihe von ataktischen Poly-α-olefin-Co- und Terpolymeren aus den Monomeren Ethylen, Propylen und 1-Buten beschrieben. Derartige Polymere besitzen auf unpolaren Substraten, wie z.B. Polyethylen und Polypropylen, ein ausgezeichnetes Benetzungsverhalten. Eine Steigerung der Klebkraft kann durch Kombination mit klebrigmachenden Harzen oder Weichmachern erreicht werden. An Harzen werden insbesondere weitgehend gesättigte Kohlenwasserstoff-Harze empfohlen. Bis zu einer Zusatzmenge von 30 % wirkt das Harz als Weichmacher. Oberhalb von 35 % nimmt die Mischung die Eigenschaft des Harzes an und wird hart und spröde. Die Zugfestigkeit nimmt bei einer Mischung aus Poly-α-olefin und Harz im Verhältnis von 70 zu 30 Gew.-Teilen um mindestens 20 % ab, wenn das Verhältnis auf 50 zu 50 Gew.-Teile zu Lasten des Poly-α-olefins verändert wird. Der Zusatz von Wachsen dient unter anderem zur Feineinstellung der Viskosität und zur Verringerung des Fädenziehens. Als Weichmacher werden in den meisten Fällen Polybutene mit einem niedrigeren Molekulargewicht empfohlen.

Preisgünstiger ist es, paraffinische oder naphthenische Mineralöle zu verwenden. Die Richtrezeptur für sprühbare Schmelzklebstoffe für Hygieneartikel enthält 70 Teile Vestoplast 704 (ein Poly-α-olefin), 25 Teile Escorez 5380 (ein hydriertes Polycyclopentadien), 5 Teile Napvis D 10 (ein bei Raumtemperatur flüssiges Polybuten) und 0,4 Teile Irganox 1010 (ein Antioxidans für Polyolefine). Dieser bekannte Sprüh-Schmelzklebstoff hat eine Schmelzviskosität von 2 000 mPas bei 190 °C und einen Erweichungspunkt von 91 °C.

Es gibt auf dem Markt auch Schmelzklebstoffe zur Konstruktion- oder Elastikverklebung auf der Basis von ca. 50 bis 60 Gew.% Kohlenwasserstoff-Harzen sowie jeweils ca. 20 bis 30 Gew.% an Styrol-Blockcopolymeren und ca. 20 % paraffinischen oder naphthenischen Mineralölen.

Diesen Schmelzklebstoffen gemeinsam ist eine relativ hohe Schmelzviskosität von mehr als 3 300 mPas bei 150 °C sowie eine Verringerung der Haftwerte während der Lagerung bei Körpertemperatur, wenn damit hergestellte Verbundwerkstoffe hautverträgliche Beschichtungen enthalten.

Diese Probleme treten vor allem bei der Verwendung der sprühbaren Schmelzklebstoffe zur Herstellung eines Verbundwerkstoffes aus wenigstens einem Vliesstoff (Nonwoven) und/oder einer Folie auf. Darunter ist auch ein Formkörper zu verstehen, der aus einer Folie und einer mittleren Schicht aus Celtulose-Pulp besteht und durch ein Spunbond- oder Carded-Vlies abgedeckt ist. Derartige Verbundwerkstoffe, wie sie insbesondere im Bereich der persönlichen Hygiene vorkommen, sind meist Materialien mit begrenzter Gebrauchsdauer, die beispielsweise nach einmaliger Benutzung weggeworfen werden (Einmalprodukte). Zu diesen Produkten zählen vornehmlich Windeln, Binden oder Slipeinlagen etc., deren Aufgabe es ist, Körperflüssigkeiten wie z.B. Urin und Blut aufzunehmen.
Diese Funktionen müssen auch nach einer Lagerung, selbst bei erhöhter Temperatur, in Gegenwart von hautverträglichen Beschichtungen des Top-Sheets erhalten bleiben, ohne daß der Verbundwerkstoff schon bei geringer mechanischer Beanspruchung in seine Bestandteile zerfällt.

Die erfindungsgemäße Aufgabe besteht daher darin, die Haftung von Verbundwerkstoffen aus Vliesen und/oder Folien mit einer hautverträglichen Beschichtung des Top-Sheets nach Lagerung bei Raumtemperatur sowie bei erhöhter Temperatur zu verbessern sowie die Verarbeitung des Schmelzklebstoffes zu erleichtern. Dazu zählt insbesondere, die Schmelzviskosität bei der Applikationstemperatur zu verringern, ohne daß gleichzeitig der Erweichungspunkt des Schmelzklebstoffes wesentlich herabgesetzt wird.

Die erfindungsgemäße Lösung ist den Patentansprüchen zu entnehmen. Sie besteht im wesentlichen in der Zusammensetzung des niedrigviskosen Schmelzklebstoffes. Er enthält nämlich
A) 20 bis 70 Gew.-%, insbesondere 45 bis 65 Gew.-% mindestens eines Kohlenwasserstoff-Harzes mit einer Erweichungstemperatur von 70 bis 140, insbesondere von 80 bis 120 °C (Komponente A),
B) 5 bis 50 Gew.-%, insbesondere 5 bis 25 Gew.-% mindestens eines Öls - vorzugsweise aus einem bei 20 °C flüssigen Harzes - mit einem durchschnittlichen Molekulargewicht MG_{w} von mehr als 500, insbesondere mehr als 900 (Komponente B),
C) 5 bis 50 Gew.-%, vorzugsweise 5 bis 30 Gew.-% mindestens eines Styrol-Block-Copolymeren und vor allem vom Typ SIS, SBS und SEBS (Komponente C) sowie
D) gegebenenfalls Zusätzen wie Wärme- und Licht-Stabilisatoren, optische Aufheller, Antistatika, Gleit- und Antiblockmittel, Nukleierungsmittel, Farbstoffe, Pigmente sowie flammhemmende Mittel.

Der Schmelzklebstoff hat eine Viskosität von 500 bis 9 000 mPas, insbesondere von 700 bis 3 200 mPas und vor allem von 1 000 bis 2 500 mPas (Brookfield Modell RVT DV II, 150 °C, Spindel 27; nach ASTM D 3236-88) und eine Erweichungstemperatur (R + B) von 60 bis 115 °C, insbesondere von 90 bis 100 °C.

Die Komponente A beinhaltet als Kohlenwasserstoff-Harz vor allem ein weitgehend, insbesondere vollständig hydriertes Polycyclopentadien-Harz sowie ein ganz oder teilweise hydriertes aromatisch modifiziertes Harz. Es kommen aber auch andere teil- bzw. vollhydrogenierte aliphatische und aromatische Kohlenwasserstoffharze in Frage, vor allem Polyterpenharze sowie Naturharze. Konkrete Beispiele dafür sind: MBG®-Reihe, insbesondere MBG 278 und 275; Regalite R und S®-Reihe; Zonarez®-Reihe; Zonatac®-Reihe; Betaprene® AC, AF, AL, AR, B, BC, BR-Reihe; Betalite®-Reihe; Eastotac-Reihe®; ECR-Reihe®; Escorez-Reihe®; Wingtack-Reihe® usw..

Komponente B umfaßt zwingend mindestens ein Öl mit einem durchschnittlichen Molekulargewicht MG_{w} von >500, wobei dieses Öl ein Polybutylen oder ein Styrol-Blockcopolymer oder ein bei 20 °C flüssiges Harz ist und wobei dieses Öl zu 5 bis 50 Gew.-%, bezogen auf die Gesamtzusammensetzung in der Zusammensetzung des Schmelzklebstoffs enthalten ist. Derartige öle verden unter folgenden Handelshamen vertrieben : Shell-öl 4178, Parapol 950, Regalite R10, LVS-l101 und Regalurez 1018. Diese Öle oder Öl-Gemische haben eine Viskosität von mindestens 1 000 mPas, insbesondere von 4 000 bis 8 10⁵ mPas, gemessen nach ASTMD 3236-88 mit Spindel 27 bei 40 °C.

Die Komponente B kann zum Teil durch Öle mit durchschnittlichen Molekulargewichten MG_{w} von weniger als 500 ersetzt werden, und zwar bis zu einem Ausmaß von 80 %, insbesondere 50 %, bezogen auf den Ölanteil, wobei die Untergrenze von 5 Gew.-%, bezogen auf die Gesamtzusammensetzung, für das Öl mit dem durchschnittlichen Molekulargewicht von >500 einzuhalten ist. Die Öle sind Öle aus bei 20 °C flüssigen, vorzugsweise weitgehend gesättigten Kohlenwasserstoffen, insbesondere Mineralöle und synthetische Öle, welche nach FDA 175 105 für Lebensmittel zugelassen sind. Diese Öle dienen u.a. zur Feineinstellung der Viskosität. Derartige Öle werden unter folgenden Handelsbezeichnungen vertrieben: Primol352®, Essomarcol-Reihe®, Pionier 0352®; Drakeol35 ®; Kaydol®, Ondina G-Reihe® und Catenex-Öle N®.

Bei der Komponente C handelt es sich um Blockcopolymere des Styrols, vor allem folgender Art: SIS, SBS, SEBS, SBR, SEPS. Derartige Rohstoffe werden unter folgenden Handelsbezeichnungen vertrieben: Kraton-Reihe, Stereon-Reihe, Vecter-Reihe, Europrene-Reihe, Taipol-Reihe, Calprene-Reihe. Finaprene-Reihe.

Die Komponenten A und B sollten zusammen mindestens 25, vorzugsweise mindestens 50 und insbesondere mindestens 70 Gew.-% ausmachen, bezogen auf die Summe der Komponenten A, B und C.

Neben diesen wesentlichen Komponenten können noch weitere Stoffe zugesetzt werden, z.B. Wärme- und Licht-Stabilisatoren, optische Aufheller, Antistatika, Gleit- und Antiblockmittel, Nukleierungsmittel und Farbstoffe, Pigmente sowie flammhemmende Mittel.

Als Antioxidans kommt vor allem Irganox 1010 in Frage, und zwar in einer Menge von 0 bis 3 Gew.-%, bezogen auf den Schmelzklebstoff insgesamt. Weitere Stabilisatoren sind vor allem Irganox PS 800; Irgastab DBTM, Wingstay-Reihe; Wingstay SN-1; Evernox 10 usw..

Zur Herstellung des Schmelzklebstoffes werden die obengenannten Rohstoffe in der Schmelze unter einer Inertgas-Atmosphäre und/oder unter Vakuum gemischt, bis sie homogen erscheinen. Die Temperatur der Schmelze beträgt zweckmäßigerweise 150 bis 200 °C. Weiterhin ist zu beachten, daß der hergestellte Schmelzklebstoff keine Stippen hat.

Der erhaltene Schmelzklebstoff ist im wesentlichen gekennzeichnet durch seine Viskosität von 500 bis 9 000, vorzugsweise von 700 bis 3 200 und vor allem von 1 000 bis 2 500 mPas bei 150 °C, gemessen nach Brookfield Modell RVT DVII; 150 °C; Spindel 27, nach ASTM D 3236-88. Weiterhin zeichnet er sich im wesentlichen durch Erweichungstemperaturen 60 bis 115, insbesondere 90 bis 100 °C aus, gemessen nach ASTM E 28.

Außerdem ist er gekennzeichnet durch seine gute Sprühbarkeit, und zwar sowohl wenn es um das "Atomisieren" der Schmelze als auch um das sogenannte "Spinnsprühen" geht.
Beim erstgenannten Verfahren handelt es sich um ein Zerstäuben der Schmelze in feine Schmelzetröpfchen, während beim "Spinnsprühen" ein Schmelzefaden drallförmig die Sprühdüse verläßt und, ohne abzureißen, in einer spiralförmigen Bahn auf dem zu beschichtenden Substrat abgelegt wird. Die Sprühtechnologie erlaubt generell einen kontaktlosen Auftrag und das Beschichten von unebenen, unregelmäßigen Flächen. Sie eignet sich weiterhin für Anwendungen, wo zwar einerseits eine flächige Verklebung gewünscht wird, andererseits aber gefordert wird, daß die verklebte Ebene für Luft oder Feuchtigkeit durchlässig ist. Durch die Tatsache, daß kein vollflächiger Auftrag erfolgt, kann Material eingespart werden.

Ein weiterer Vorteil zeigt sich bei der Beschichtung temperaturempfindlicher Substrate. Durch den kontaktlosen Auftrag und aufgrund des sehr geringen Wärmeinhalts der ankommenden Schmelze bzw. des Schmelzefadens wird das Substrat weit weniger belastet bzw. geschädigt als bei den üblichen Auftragstechnologien. Die Hotmelt-Sprühtechnologie ist umweltfreundlich und deckt insgesamt viele Anwendungen ab, die bislang den gesprühten lösungsmittelbasierten Klebstoffen vorbehalten waren.

Im Rahmen der erfindungsgemäßen Verfahrens wird der Klebstoff in der Regel in einer Menge von etwa 0,1 bis etwa 10 g/m², vorzugsweise in einer Menge von etwa 1 bis etwa 6 g/m² und insbesondere in einer Menge von etwa 3 bis etwa 5 g/m² zumindest in Teilbereichen auf eines der zu verklebenden Substrate aufgetragen. Vorzugsweise erfolgt der Auftrag jedoch vollflächig.

Der erfindungsgemäße Klebstoff wird dabei auf eine Temperatur von etwa 100 bis etwa 180°C erwärmt. Die Klebstofftemperatur richtet sich dabei nach der Viskosität und dem verwendeten Auftragsverfahren. Beispielsweise kann der Klebstoffauftrag auch über eine Schlitzdüse erfolgen. In diesem Fall hat sich beispielsweise eine Klebstofftemperatur von etwa 120 bis etwa 150°C bewährt. Im Falle des Control-Coat-Verfahrens oder auch des Porous-Coat-Verfahrens haben sich Klebstofftemperaturen von etwa 130 bis etwa 170°C bewährt.

Der erfindungsgemäße Schmelzklebstoff eignet sich potentiell insbesondere wegen seiner niedrigen Schmelzviskosität als "Low Melt", z.B. zum Verkleben von empfindlichen Materialien wie Folien mit einer Dicke von weniger als 25 µm und mit niedriger Erweichungstemperatur.

Die erfindungsgemäßen Schmelzklebstoffe eignen sich zum Verbinden unterschiedlichster Materialien. So lassen sich Materialien wie Polyolefinfolien, beispielsweise Polyethylenfolien oder Polypropylenfolien, Polyoiefinvliese, beispielsweise Polyethylenvliese oder Polypropylenvliese, Polyurethanfolien, Polyurethanschäume, Folien oder Formkörper aus Cellulosederivaten, beispielsweise aus Zellstoff (Tissues), Folien oder Formkörper aus Polyacrylaten oder Polymethacrylaten, Folien oder Formkörper aus Polyester, insbesondere Polylactid, Polycaprolacton, Polyesteramid sowie Materialien auf Basis von Stärke und Cellulose, z.B. thermoplastische Stärke und Viskose, untereinander verbinden. Eine Verbindung ist dabei sowohl unter gleichen als auch unter verschiedenen Materialien möglich.

In einer bevorzugten Ausführungsform des erfindungsgemäßen Verfahrens wird der Klebstoff zur Herstellung eines mindestens eine Vliesstofflage enthaltenden Verbundwerkstoffs eingesetzt. Besonders bevorzugt ist es, wenn als Vliesstofflage ein Polypropylen-Spinnvlies mit einem Flächengewicht von etwa 10 bis etwa 30 g/m², insbesondere etwa 15 bis etwa 20 g/m² eingesetzt wird.

Unter einer "Vliesstofflage" wird im Rahmen der vorliegenden Erfindung ein flexibles Flächengebilde verstanden, das nicht durch die klassische Methode der Gewebebindung von Kette und Schuß oder durch Maschenbildung, sondern durch Verschlingung und/oder kohäsive und/oder adhäsive Verbindung von Texilfasem hergestellt wird. Unter Vliesstoffen werden damit lockere Materialien aus Spinnfasem oder Filamenten, meist aus Polypropylen, Polyester oder Viscose hergestellt, verstanden, deren Zusammenhalt im allgemeinen durch die den Fasern eigene Haftung gegeben ist. Hierbei können die Einzelfasern eine Vorzugsrichtung aufweisen (orientierte oder Kreuzlage-Vliese) oder ungerichtet sein (Wirrvliese). Die Vliese können mechanisch verfestigt werden durch Vemadeln, Vermaschen oder durch Verwirbeln mittels scharfer Wasserstrahlen (sog. spunlaced Vliese). Adhäsiv verfestigte Vliese entstehen durch Verkleben der Fasem mit flüssigen Bindemitteln (beispielsweise Acrylat-Polymere, SBR/NBR, Polyvinylester- oder Polyurethan-Dispersionen) oder durch Schmelzen bzw. Auflösen von sogenannten Bindefasem, die dem Vlies bei der Herstellung beigemischt wurden. Bei der kohäsiven Verfestigung werden die Faseroberflächen durch geeignete Chemikalien gelöst und durch Druck verbunden oder bei erhöhter Temperatur verschweißt. Vliese aus sogenannten Spinnvliesen, d.h. durch Verspinnen und anschließendes Ablegen, Aufblasen oder Aufschwemmen auf ein Transportband hergestellte Flächengebilde, nennt man Spinnvliesstoffe. Zusätzliche Fäden, Gewebe oder Gewirke enthaltende Vliesstoffe gelten als verstärkte Vliesstoffe.

Die erfindungsgemäßen Schmelzklebstoffe eignen sich insbesondere zum Verkleben von Folien, insbesondere aus Polyolefinen, und von Vliesen, insbesondere aus Polypropylen, und Cellulose-Formkörpern (Core-Klebstoff), wobei die Auftragstemperatur zwischen 120 und 180 °C, vorzugsweise zwischen 140 und 160 °C liegt und das Auftragsgewicht zwischen 2 und 10, vorzugsweise zwischen 3 bis 6 g/m² variiert und die Auftragsgeschwindigkeit zweckmäßigerweise zwischen 50 und 400 m/min liegt.

Die erfindungsgemäßen Klebstoffe können in einer Reihe von Anwendungen zum Einsatz kommen. Beispielsweise in der Bauindustrie, in der Automobilzulieferindustrie sowie bei der Verpackung von Gegenständen. Besonders bevorzugt ist allerdings der Einsatz bei der Herstellung von Verbundwerkstoffen, z.B. besonders geeignet für Folie/Folie-, Folie/Vlies- und Vlies/Vlies-Verbunden, insbesondere zur Herstellung mindestens einen Vliesstoff enthaltenden Verbundwerkstoffen, vor allem zur Herstellung von Formkörpem aus einer Folie auf der einen und einem Spunbonded- oder Carded-Vlies auf der anderen Seite mit einer dazwischen liegenden Schicht aus Cellulose-Pulp. Hierzu gehören insbesondere Wegwerfartikel, beispielsweise Windeln, Krankenhaustextilien, Binden, Bettauflagen und dergleichen, vorzugsweise im Hygiene- und Medikal-Bereich.

Die erfindungsgemäßen Schmelzklebstoffe eignen sich insbesondere für Konstruktionsverklebungen im Hygienebereich, insbesondere zum Verkleben von Windeln, Slipeinlagen und Damenbinden.

Hierfür eignen sich die erfindungsgemäßen Klebstoffe u.a. auch wegen ihrer Resistenz gegenüber hautverträglichen Beschichtungen. Um die "Skin-Care"-Eigenschaften von z.B. Windeln zu verbessern, werden deren Top-Sheets mit hautverträglichen Gemischen ausgerüstet Solche Windeln stellen besondere Anforderungen an den Klebstoff, da durch die Beschichtungen die Haftwerte des Klebeverbundes vermindert werden können. So wurde z.B. bei bekannten Klebstoffen auf der Basis von SIS-Kautschuk eine starke Reduktion der Haftwerte von Vlies/Folien-Laminaten festgestellt, nachdem ca. 4 g/m² einer hautverträglichen Beschichtung auf der Basis eines Fettalkohols aufgebracht wurde. Die Reduktion lag im Bereich von 30 bis 70 % nach 24 Stunden bei Raumtemperatur und im Bereich von 40 bis 90 % nach 4 Stunden bei 40 °C.

Derartige hautverträgliche Beschichtungen sind z.B. in der WO 96/16682 beschrieben. Ihr diesbezüglicher Inhalt wird ausdrücklich in die vorliegende Anmeldung übernommen. Es handelt sich dabei um bei 20 °C halbfeste bis feste Stoffgemische mit Linderungsmittel auf der Basis von Fettsäureestern, Alkylethoxylaten, ethoxylierten Fettsäureestem, Fettalkoholen, Polysiloxanen und Erdöl-basierten Produkten sowie deren Mischung, mit immobilisierenden Mitteln wie Polyhydroxyfettsäureestern, Polyhydroxyfettsäureamiden, C₁₄-C₂₂-Fettalkoholen,-Fettalkoholethoxylaten, -Fettsäuren und Paraffinwachsen sowie deren Mischungen. Gewünschtenfalls können noch Hitfsstoffe anwesend sein, um weitere Effekte zu bewirken, z.B. hydrophile oberflächenaktive Stoffe, Viskositätsregler, Duftstoffe, Desinfektionsmittel, Filmbildner usw.. Sie sollten zweckmäßigerweise im Bereich von ca. 36 bis ca. 70 °C schmelzen.
Gegenüber derartigen hautverträgliche Beschichtungen zeigen die erfindungsgemäßen Klebstoffe eine wesentlich bessere Beständigkeit der Haftwerte bei der Lagerung als bekannte Klebstoffe, und zwar sowohl bei Raumtemperatur als auch bei erhöhter Temperatur, z.B. bei Körpertemperatur.

Eine besonders stabile beschichtungsresistente Verklebung erhält man, wenn man einen Klebstoff mit einem mittleren Molekulargewicht der Ölphase von 500 bis 35 000 in Kombination mit einer Vlies-Ausrüstung mit einer hautverträglichen Beschichtung (Lotion) mit einem mittleren Molekulargewicht ab 350, insbesondere ab 500 verwendet.

Das folgende Beispiel dient der näheren Erläuterung der Erfindung.

### I Ausgangsstoffe zur Herstellung der Schmelzklebstoffe

1) Kraton KX 605: SIS Block-Copolymer mit 29 % Styrol-Anteil und 17 % Diblock der Firma Shell,
2) MBG 278: aliphatisches, vollständig hydriertes Cyclopentadien-Harz (Kohlenwasserstoff-Harz) der Firma Hercules,
3) MBG: aliphatisches, aromatisch modifiziertes, teilweise hydriertes Kohlenwasserstoff-Harz der Firma Hercules,
4) LVSI 101: Styrol-Isopren-Diblock-Copolymer mit 13 % Styrol-Anteil der Firma Shell,
5) Regalite R 10: aliphatisches, vollständig hydriertes Cyclopentadien-Harz (Kohlenwasserstoff-Harz) der Firma Hercules,
6) Regalrez 1018: aliphatisches, vollständig hydriertes Cyclopentadien-Harz (Kohlenwasserstoff-Harz) der Firma Hercules,
7) Parapol 950: Polybutylen der Firma Esso,
8) Shell-Öl 4178: naphthenisches Öl der Firma Shell,
9) Irganox 1010: Antioxidant der Firma Ciba-Geigy.

### II Herstellung und Eigenschaften der Schmelzklebstoffe

Zur Herstellung der Schmelzklebstoffe werden die obengenannten Ausgangsstoffe entsprechend den in Tabelle 1 angegebenen Mengenanteilen in der Schmelze bei 160 bis 170 °C in der Reihenfolge Öl + Antioxidans, Harz und gegebenenfalls thermoplastischen Elastomer aufgeschmolzen und solange bei 160 bis 170 °C gerührt, bis die Mischung stippenfrei (homogen) wurde. Dazu wurden im allgemeinen 4 bis 6 Stunden benötigt. Weiterhin ist es zweckmäßig, unter Vakuum und/oder Inertgas-Atmosphäre (Stickstoff) zu arbeiten, insbesondere bei Einsatz von Styrol-Block-Copolymeren.

Die erhaltenen Schmetzklebstoffe haben die in der Tabelle 1) angegebenen Eigenschaften.

### III Klebetechnische Untersuchungen der Schmelzklebstoffe

1. Die Sprühversuche wurden mit dem Gerät CT 325 der Fa. Meltex, Lüneburg, durchgeführt. Als Sprühköpfe wurden die Modelle CF 203 und CF 205 der Fa. Nordson verwendet. Das Kürzel CF steht für Controlled Fiberisation. Bei den hier eingesetzten CF-Auftragsköpfen wird der aus der Düse austretende Klebstoff durch gezielte Verwirbelung mit Druckluft in eine spiralförmige Bewegung versetzt. Dieses Verfahren ermöglicht ein kontrolliertes, flächendeckendes und kantenscharfes Applizieren von Schmelzklebern.

| | |
|---|---|
| Auftragsmenge: | 3,5 m⁻² |
| Auftragsgeschwindigkeit | 100 m · min⁻¹ |
| Temperatur im Schmelzbehälter: | 160 °C |
| Sprühlufttemperatur: | 180 °C |
| Klebstofftemperatur: | 130 bis 160 °C |

Mit diesen Angaben wurden Verbunde hergestellt, bei denen auf die Folie gesprüht wurde und das Vlies gegenlief.

Als Folie wurde eine BP-PE-Folie verwendet, d.h. eine Polyethylen-Folie mit einer Dicke von etwa 10 bis etwa 50 µm, insbesondere etwa 20 bis etwa 30 µm.
Als Vlies wurde verwendet Corosoft Plus H, einem Vlies aus Polypropylen mit einem Flächengewicht von 14 bis 30 g/m², insbesondere 17 g · m⁻².
Der Schmelzklebstoff wurde auf die Folie gesprüht, die dann mit dem Vlies verbunden wurde.
Diese Verbunde wurden mit 3,5 g/m² einer hautverträglichen Lotion beschichtet.
Das durchschnittliche Molekulargewicht der Lotion 1 betrug 1 000, das der Lotion 2 600 und das der Lotion 3 nur 400.
Die Haftwert-Untersuchungen sind in Tabelle 1 zusammengefaßt.

### IV Ergebnisse

Die Untersuchungen der erfindungsgemäßen Beispiele 1 und 7 zeigen, verglichen mit dem Vergleichs-Versuch:
- eine deutliche Verbesserung der Haftwerte mit Faserriß nach erfolgter Lagerung bei 40 °C, unabhängig von den hautverträglichen Beschichtungen (Lotionen) und
- eine deutliche Verringerung der Schmelzviskosität bei nur unwesentlicher Verringerung der Erweichungstemperatur.
- Die Lotions-Resistenz der Klebstoffe wird mit Erhöhung des Molekulargewichts der Ölphase und der Lotion verbessert.

### V Beschreibung der Meßmethoden:

- Schmelzviskosität der Klebstoffe: Brookfield Modell RVT DV II, 150 °C, Spindel 27; nach ASTM D 3236-88,
- Schmelzviskosität der Ölphase: ebenso jedoch bei 40 °C.
- Erweichungspunkt nach ASTM E 28,
- Schälfestigkeit (sogenannter Haftwert) in Anlehnung an DIN 53 530 mit einer Zugprüfmaschine der Fa. Zwick Typ 1435 bei 20 °C und 50 % rel. Luftfeuchte. Das Muster von 50 mm Breite wird mit einer Geschwindigkeit von 300 mm/min in einem Winkel von 180 °C getrennt. Die Angabe erfolgt in N.5cm⁻¹. Die Musterbeschichtung wurde frühestens nach 48 h vermessen.
- Lagerung der Proben erfolgte 4 h bei 40 °C.
- Das Molekulargewicht (Gewichtsmittel) wurde nach ASTM S-841-86 bestimmt.

**Tabelle 1**

| | Vergl. | B 1 | B 2 | B 3 | B 4 | B 5 | B 6 | Vergl. |
|---|---|---|---|---|---|---|---|---|
| **I Komponenten [in Gew.-%]** | | | | | | | | |
| Kraton 605 | 21 | 11 | 11 | 11 | 11 | 11 | 11 | |
| MBG 275 | 24 | 24 | 24 | 24 | 14 | 24 | 14 | 24 |
| MBG 278 | 36 | 36 | 36 | 36 | 36 | 36 | 36 | 36 |
| LVSI | | 10 | 28 | | 10 | 10 | 10 | 29 |
| Regalite R 10 | | | | | 10 | | | |
| Regalrez 1018 | | | | | | 10 | 10 | 10 |
| Parapol 950 | | | | 28 | 18 | 8 | 18 | |
| Shell-Öl 4178 | 18 | 18 | | | | | | |
| Irganox 1010 | 1 | 1 | 1 | 1 | 1 | 1 | 1 | 1 |

| **II phys. Daten** | | | | | | | | |
|---|---|---|---|---|---|---|---|---|
| η(150 °C)[mPas] | 3359 | 780 | 3155 | 1510 | 2270 | 1435 | 1137 | 1400 |
| Ring & Ball[°C] | 98,9 | 81,2 | 95,1 | 99,7 | 97,3 | 88,6 | 92 | 67,7 |

| **III Haftwerte [N5cm**^{**-1**}**] nach Lagerung** | | | | | | | | |
|---|---|---|---|---|---|---|---|---|
| 24 h RT ohne Lot. | 3,7* | 3,6* | 2,2 | 2,1 | 2,7* | 3,5* | 3,1* | 4,5* |
| 24 h RT Lot. 1 | 2,8 | 3,6 | 3,6 | 2,6 | 5,3* | 3,6* | 2,5 | 3,4 |
| 24 h RT Lot. 2 | 1,5 | 3 | 4* | 1,9 | 3,4* | 3 | 1,4 | 3,5 |
| 24 h RT Lot. 3 | 1 | 2,7 | 3,5* | 1,7 | 3,3 | 0,8 | 3,1 | 1,7 |
| 4 h 40 °C ohne Lot. | 3,9* | 4,6* | 4,2* | 2,3 | 3,6* | 5,1* | 3,4* | 3,7* |
| 4 h 40 °C Lot. 1 | 2,3 | 3,8* | 3,5 | 1,6 | 4,2* | 3,5 | 3,6* | 3,7* |
| 4 h 40 °C Lot. 2 | 1 | 2,1 | 2,9 | 1,3 | 3 | 2,5 | 0,9 | 4,5* |
| 4 h 40 °C Lot. 3 | 1,2 | 1,9 | 2,4 | 0,9 | 1,8 | 1,6 | 2,4 | 1,1 |

| | | | | | | | | |
|---|---|---|---|---|---|---|---|---|
| * = Material- oder Faserabriß | | | | | | | | |

## Patentansprüche

1. Niedrigviskoser Schmelzklebstoff auf der Basis mindestens eines bei 20 °C festen Kohlenwasserstoff-Harzes und eines Öles, **gekennzeichnet durch** eine Erweichungstemperatur von 60 bis 115 °C gemessen nach ASTM E 28 und eine Viskosität von 500 bis 9 000 mPas bei 150 °C gemessen nach ASTM D 3236-88 sowie **dadurch**, daß er
A) 20 bis 70 Gew.-% mindestens eines Kohlenwasserstoff-Harzes mit einer Erweichungstemperatur im Bereich von 70 bis 140 °C,
B) 5 bis 50 Gew.-% mindestens eines Öls mit einem durchschnittlichen Molekulargewicht MGw von > 500, wobei das Öl ein Polybutylen oder ein Styrol-Blockcopolymer oder ein bei 20 °C flüssiges Harz ist,
C) 5 bis 50 Gew.-% mindestens eines Styrol-Block-Copolymeren sowie
D) gegebenenfalls Zusätze
enthält.

2. Schmelzklebstoff nach Anspruch 1, **gekennzeichnet durch** seine Viskosität im Bereich von 700 bis 3 200 mPas bei 150 °C, gemessen nach ASTM D 3236-88.

3. Schmelzklebstoff nach Anspruch 1 oder 2, **dadurch gekennzeichnet, daß** das Kohlenwasserstoff-Harz ein hydriertes Cyclopentadien-Harz oder ein hydriertes, aromatisch modifiziertes Kohlenwasserstoff-Harz ist.

4. Schmelzklebstoff nach mindestens einem der Ansprüche 1 bis 3, **dadurch gekennzeichnet, daß** der Zusatz mindestens ein Stoff der folgenden Gruppe ist: Wärme- und Licht-Stabilisator, optischer Aufheller, Antistatikum, Gleit- und Antiblockmittel, Nukleierungsmittel, Farbstoff, Pigment oder flammhemmendes Mittel.

5. Schmelzklebstoff nach mindestens einem der Ansprüche 1 bis 4, **dadurch gekennzeichnet, daß** die Summe der Komponenten A und B mindestens 25, vorzugsweise mindestens 50 und insbesondere mindestens 70 Gew.-% der Summe der Komponenten A + B + C ausmacht.

6. Herstellung des Schmelzklebstoffes nach mindestens einem der Ansprüche 1 bis 5 durch Mischen der Rohstoffe unter einer Inertgas-Atmosphäre und/oder unter Vakuum im Temperaturbereich von 150 bis 200 °C.

7. Verwendung des Schmelzklebstoffes nach mindestens einem der Ansprüche 1 bis 5 für Konstruktionsverklebungen im Hygienebereich, insbesondere zum Verkleben von Windeln, Slipeinlagen und Damenbinden.

8. Verwendung des Schmelzklebstoffes nach mindestens einem der Ansprüche 1 bis 5 zum Verkleben von Folien, insbesondere aus Polyolefinen, und von Vliesen, insbesondere aus Polypropylen, und Cellulose-Formkörpern (Core-Klebstoff), wobei die Auftragstemperatur zwischen 120 und 180 °C, vorzugsweise zwischen 140 und 160 °C liegt und das Auftragsgewicht zwischen 2 und 10, vorzugsweise zwischen 3 bis 6 g/m² variiert und die Auftragsgeschwindigkeit zweckmäßigerweise zwischen 50 und 400 m/min liegt.

9. Verwendung von Anspruch 8, wobei die Vliese mit einer hautverträglichen Lotion mit einem durchschnittlichen Molekulargewicht von mehr als 380 ausgerüstet sind.

## Claims

1. A low-viscosity hotmelt adhesive based on at least one hydrocarbon resin solid at 20°C and at least one oil, **characterized by** a softening temperature of 60 to 115°C, as measured to ASTM E 28, and a viscosity of 500 to 9000 mPas at 150°C, as measured to ASTM D 3236-88 and in that it contains
A) 20 to 70% by weight of at least one hydrocarbon resin with a softening temperature of 70 to 140°C,
B) 5 to 50% by weight of at least one oil with an average molecular weight MG_{w} of > 500, the oil being a polybutylene or a styrene block copolymer or a resin liquid at 20°C,
C) 5 to 50% by weight of at least one styrene block copolymer and
D) optionally additives.

2. A hotmelt adhesive as claimed in claim 1, **characterized by** a viscosity of 700 to 3200 mPas at 150°C, as measured to ASTM D 3236-88.

3. A hotmelt adhesive as claimed in claim 1 or 2, **characterized in that** the hydrocarbon resin is a hydrogenated cyclopentadiene resin or a hydrogenated aromatically modified hydrocarbon resin.

4. A hotmelt adhesive as claimed in any of claims 1 to 3, **characterized in that** the additive is at least one substance from the following group: heat and light stabilizer, optical brightener, antistatic agent, lubricant and antiblocking agent, nucleating agent, dye, pigment or flame retardant.

5. A hotmelt adhesive as claimed in any of claims 1 to 4, **characterized in that** the sum of components A and B makes up at least 25% by weight, preferably at least 50% by weight and more preferably at least 70% by weight of the sum of components A + B + C.

6. A process for the production of the hotmelt adhesive claimed in at least one of claims 1 to 5 by mixing the raw materials in an inert gas atmosphere and/or in vacuo at a temperature of 150 to 200°C.

7. The use of the hotmelt adhesive as claimed in at least one of claims 1 to 5 for structural bonding in the field of hygiene, more particularly for bonding diapers, panty liners and sanitary napkins.

8. The use of the hotmelt adhesive claimed in at least one of claims 1 to 5 for bonding films, more particularly of polyolefins, and nonwovens, more particularly of polypropylene, and shaped cellulose articles (core adhesive), the application temperature being between 120 and 180°C and preferably between 140 and 160°C, the add-on weight varying between 2 and 10 and preferably between 3 and 6 g/m² and the application rate preferably being between 50 and 400 m/min.

9. The use claimed in claim 8, **characterized in that** the nonwovens are finished with a dermatologically compatible lotion having an average molecular weight of more than 380.

## Revendications

1. Colle thermofusible de faible viscosité à base d'au moins une résine hydrocarbonée solide à 20°C et d'une huile, **caractérisée par** une température de ramollissement de 60 à 115°C mesurée selon la norme ASTM E 28 et une viscosité de 500 à 9000 mPa.s à 150°C mesurée selon la norme ASTM D 3236-88, et en ce qu'elle contient
A) de 20 à 70 % en poids d'au moins une résine hydrocarbonée avec une température de ramollissement dans un intervalle de 70 à 140°C,
B) de 5 à 50 % en poids d'au moins une huile avec un poids moléculaire moyen en poids MGw supérieur à 500, où l'huile est un polybutylène ou un copolymère séquencé de styrène, ou une résine liquide à 20°C,
C) de 5 à 50 % en poids d'au moins un copolymère séquencé de styrène, ainsi que
D) le cas échéant des additifs.

2. Colle thermofusible selon la revendication 1, **caractérisée par** sa viscosité dans un intervalle de 700 à 3200 mPa.s à 150°C, mesurée selon la norme ASTM D 3236-88.

3. Colle thermofusible selon la revendication 1 ou 2, **caractérisée en ce que** la résine hydrocarbonée est une résine cyclopentadiène hydrogénée ou une résine hydrocarbonée hydrogénée, aromatiquement modifiée.

4. Colle thermofusible selon au moins une des revendications 1 à 3, **caractérisée en ce que** l'additif est au moins une substance du groupe suivant : stabilisateur vis-à-vis de la chaleur et de la lumière, azurant optique, antistatique, lubrifiant et agent anti-bloquant, agent de nucléation, colorant, pigment ou agent ignifuge.

5. Colle thermofusible selon au moins une des revendications 1 à 4, **caractérisée en ce que** la somme des composants A et B est d'au moins 25, de préférence d'au moins 50 et en particulier d'au moins 70 % en poids de la somme des composants A + B + C.

6. Préparation de la colle thermofusible selon au moins une des revendications 1 à 5 par mélange des matières premières sous une atmosphère de gaz inerte et/ou sous vide dans un intervalle de température de 150 à 200°C.

7. Utilisation de la Colle thermofusible selon au moins une des revendications 1 à 5 pour des collages de construction dans le domaine de l'hygiène, en particulier pour le collage des couches, des protège-slips et des serviettes d'hygiène féminine.

8. Utilisation de la colle thermofusible selon au moins une des revendications 1 à 5 pour le collage de feuilles, en particulier de polyoléfines, et de non-tissés, en particulier de polypropylène, ainsi que d'articles moulés en cellulose (adhésif noyau), la température de dépôt se situant entre 120 et 180°C, de préférence entre 140 et 160°C, et le poids de matière déposée variant entre 2 et 10, de préférence entre 3 et 6 g/m², et la vitesse de dépôt se situant de manière appropriée entre 50 et 400 m/mn.

9. Utilisation selon la revendication 8, dans laquelle les non-tissés sont munis d'une lotion compatible pour la peau, ayant un poids moléculaire moyen supérieur à 380.
